# EUROPÄISCHE PATENTSCHRIFT

(11) **EP 3 630 406 B1**
(45) Veröffentlichungstag und Bekanntmachung des Hinweises auf die Patenterteilung: **28.07.2021**
(21) Anmeldenummer: 18730240.1
(22) Anmeldetag: 23.05.2018
(51) Int. Cl.: B23K 15/02, B23K 10/00, B23K 26/04, B23K 26/044, B24C 1/04

(54) **VERFAHREN ZUR ERKENNUNG UND BEARBEITUNG VON DEFINIERTEN KONTUREN BEI DER DURCHTRENNUNG EINES FESTKÖRPERS MITTELS EINES HOCHENERGIESTRAHLS**
METHOD FOR DETECTING AND PROCESSING DEFINED CONTOURS IN THE CUTTING OF A SOLID BODY BY MEANS OF A HIGH ENERGY BEAM
PROCÉDÉ DE DÉTECTION ET DE TRAITEMENT DE CONTOURS DÉFINIS LORS DU SECTIONNEMENT D'UN CORPS SOLIDE AU MOYEN D'UN FAISCEAU DE GRANDE PUISSANCE

(30) Priorität: 23.05.2017 EP 17172421
(43) Veröffentlichungstag der Anmeldung: 08.04.2020
(73) Patentinhaber: Siemens Aktiengesellschaft, 80333 München (DE)
(72) Erfinder: SCHERMANN, Aleksandra, 71229 Leonberg (DE); SPIELMANN, Ralf, 70569 Stuttgart (DE)
(86) Internationale Anmeldenummer: PCT/EP2018/063432
(87) Internationale Veröffentlichungsnummer: WO 2018/215500

(56) Entgegenhaltungen:
- DE-A1-102004 039 916
- Power Automation Gmbh: "Schlüsselfertige Lösung für Laserschneidmaschinen", , 30. Juni 2016 (2016-06-30), Seiten 1-11, XP055419933, Gefunden im Internet: URL:https://www.powerautomation.de/fileadm in/downloads/Brochures_PA9000/DE/PA_Soluti on_Laser_WEB_DE_20170831.pdf [gefunden am 2017-10-27]
- Beckhoff: "Beckhoff Information System - German", , 2. April 2002 (2002-04-02), XP055419993, Gefunden im Internet: URL:https://infosys.beckhoff.com/index.php ?content=../content/1031/tcnci/1255091211. html&id= [gefunden am 2017-10-30]
- Power Automation Gmbh: "Schl?sselfertige L?sung f?r Laserschneidmaschinen", , 30 June 2016 (2016-06-30), pages 1-11, XP055419933, Retrieved from the Internet: URL:https://www.powerautomation.de/fileadm in/downloads/Brochures_PA9000/DE/PA_Soluti on_Laser_WEB_DE_20170831.pdf [retrieved on 2017-10-27]
- Beckhoff: "Beckhoff Information System - German", , 2 April 2002 (2002-04-02), XP055419993, Retrieved from the Internet: URL:https://infosys.beckhoff.com/index.php ?content=../content/1031/tcnci/1255091211. html&id= [retrieved on 2017-10-30]

## Beschreibung

Die Erfindung betrifft ein Verfahren zur Durchtrennung eines Festkörpers, wobei ein Hochenergiestrahl auf einer dem Hochenergiestrahl zugewandten Oberfläche des Festkörpers eine Kontur abfährt und dabei einen Schneidspalt erzeugt, wobei eine die Durchtrennung steuernde Steuereinheit über eine Funktion zur Konturverletzungserkennung und über eine Funktion zur Konturverletzungsvermeidung verfügt. Ferner betrifft die Erfindung eine Steuereinheit zur Durchführung eines derartigen Verfahrens.

Für eine Fertigung bzw. ein Zuschneiden von Blechen werden heute numerisch gesteuerte oder computergestützte numerisch gesteuerte Schneidmaschinen eingesetzt. Eine numerische Steuereinheit (NC) oder eine computergestützte numerische Steuereinheit (CNC) - im Folgenden nur Steuereinheit - ist ein Gerät zur Steuerung von Maschinen, das Steuerbefehle liest, die als Code auf einem Datenträger vorliegen, und in Arbeits- bzw. Bewegungsabläufe umsetzt. Zu erzeugende Ausnehmungen liegen als Konturen beschrieben in einem NC- oder CNC-Programm - im Folgenden nur NC-Programm genannt - innerhalb der Steuereinheit vor. Die Steuereinheit enthält zudem Software, die eine Bahn der Schneidmaschine gemäß dem NC-Programm steuert.

Derartige Schneidmaschinen kommen in unterschiedlichen technischen Gebieten zum Einsatz. Beispielsweise werden Bleche für die Automobilindustrie und den Schiffsbau auf diese Weise geschnitten. Besonders Schneidmaschinen, die mittels Hochenergiestrahlen, insbesondere Laser- oder Elektronenstrahlen, Ausnehmungen in metallischen Werkstücken vornehmen, erfreuen sich zunehmender Beliebtheit.

In der DE102004039916A1 wird beispielsweise ein Verfahren zur Erzeugung einer engen Ausnehmung, z. B. einer Bohrung, eines Schnittes oder einer Gravur, in einem metallischen Werkstück beschrieben, bei dem ein Hochenergiestrahl in das Werkstück eindringt und dort eine Schmelze erzeugt.

Der Hochenergiestrahl fährt zur Erzeugung der Ausnehmung eine Kontur ab und erzeugt hierbei einen Schneidspalt.

In modernen Steuereinheiten sind Überwachungsfunktionen verfügbar, die eine Schädigung der Schneidmaschine wie auch des Werkstücks vermeiden sollen. Beispielsweise kann auf eine Funktion zur Werkzeug-Werkstück-Kollisionsüberwachung - auch Konturverletzungserkennung genannt - zugegriffen werden, die vornehmlich in einer Funktion zur Werkzeugradiuskorrektur integriert ist. Hierbei werden die Werkzeugwege der Schneidmaschine durch vorausschauende Konturberechnungen überwacht. Mögliche Konturverletzungen werden dadurch rechtzeitig erkannt und können von der Steuereinheit durch eine Funktion zur Konturverletzungsvermeidung verhindert werden, indem zu Konturverletzungen führende Konturen ausgelassen werden. Die Konturverletzungserkennung erkennt hierbei Konturen, bei welchen bei einem Abfahren der Kontur und einer Erzeugung eines Schneidspalts mehr Material des Festkörpers weggenommen wird als eigentlich vorgesehen ist (siehe z.B. "Schlüsselfertige Lösung für Laserschneidmaschinen" unter https:// www.powerautomation.de/fileadmin/downloads/Brochures_PA9000/DE/ PA_Solution_Laser_WEB_DE_20170831.pdf, welches eine Basis für den Oberbegriff der Ansprüche 1 und 8 bildet).

Die Werkzeug-Werkstück-Kollisionsüberwachung kann zudem als eine Flaschenhalserkennung fungieren. Ein Flaschenhals beschreibt hierbei eine Kontur, die nicht ohne Konturverletzung erzeugbar ist. Wird eine derartige Kontur abgefahren und ein Schneidspalt erzeugt, wird mehr Material des Festkörpers abgetragen als ursprünglich vorgesehen war.

Soll am Werkstück beispielsweise eine Kontur oder Teilkontur ausgenommen werden, deren Eingang - Eingang bezieht sich auf eine Fahrrichtung des Hochenergiestrahls - bezüglich eines Durchmessers des Hochenergiestrahls zu klein ist, wird die Kontur bzw. ein Teil der Kontur aufgrund der Funktion zur Konturverletzungsvermeidung ausgelassen. Da die Genauigkeit der Steuereinheiten im µm-Bereich und darunter liegt, genügen hierfür geringe Größenunterschiede von nur 1 µm oder weniger. Ist der Durchmesser des Hochenergiestrahls nur geringfügig größer als die programmierte Kontur, wird die Kontur ausgelassen.

Es besteht die Möglichkeit, die Konturverletzungsvermeidung vor einer zu Konturverletzungen führenden Kontur, die eine Ausnehmung beschreibt, welche unbedingt erzeugt werden soll und bei welcher Abweichungen zwischen der programmierten und der erzeugten Kontur nicht ausschlaggebend sind, manuell zu deaktivieren und nach einer Bearbeitung der Kontur wieder zu aktivieren. Dies ist jedoch mit hohem Aufwand verbunden.

Der Erfindung liegt die Aufgabe zugrunde, ein vereinfachtes Verfahren zu schaffen, bei dem ein Hochenergiestrahl automatisch auch zu Konturverletzungen führende Konturen abfährt und die durch die Konturen beschriebenen Ausnehmungen erzeugt.

Die Lösung der Aufgabe gelingt durch ein Verfahren zur Durchtrennung eines Festkörpers nach Anspruch 1.

Ferner gelingt die Lösung der Aufgabe durch eine Steuereinheit zur Durchführung eines derartigen Verfahrens nach Anspruch 8.

Besonders gut kann die Erfindung bei der Durchtrennung des Festkörpers mittels Laserschneiden - auch unter Laserstrahlschneiden bekannt - angewendet werden. Zum Laserschneiden zählen mitunter Laserstrahlschmelzschneiden, Laserstrahlbrennschneiden und Laserstrahlsublimierschneiden. Jedoch ist die Anwendung eines derartigen Verfahrens auch bei anderen fertigungstechnischen Trennungen möglich, bei denen die Form eines Werkstückes verändert wird, indem der Zusammenhalt örtlich aufgehoben wird. Exemplarisch können hierfür Wasserstrahlschneiden, Brennschneiden und Plasma-Schmelzschneiden oder auch konventionelle Trennverfahren wie Fräsen angeführt werden.

Erfindungsgemäß dient die Steuereinheit einer Steuerung einer Laserschneidmaschine.

Laserschneiden eignet sich immer dann besonders gut für die Durchtrennung von Festkörpern, wenn komplexe Konturen nach einer schnellen und nahezu kraftfreien Bearbeitung verlangen. Der Laserstrahl ermöglicht ein gratfreies Schneiden auch von sehr schmalen Schneidspalten. Zudem ist ein Wärmeeintrag in den Festkörper nur gering. Neben metallischen Werkstoffen wie z. B. Baustahl, Edelstahl und Aluminium eignet sich das Laserschneiden unter anderem auch für Holz, Kunststoff, Glas und Keramik.

In einer erfindungsgemäßen Ausführungsform erhält die Steuereinheit bezüglich der Konturen zwei wesentliche Informationen: Wenigstens einen Steuerbefehl, der die Ausnehmung einer Kontur beschreibt, sowie eine Information zu wenigstens einer definierten Kontur, vorzugsweise einer zu Konturverletzungen führenden Kontur, die eine Ausnehmung beschreibt, welche unbedingt erzeugt werden soll und nicht ausgelassen werden darf. Der Steuerbefehl liegt vorzugsweise in einem NC-Programm vor und wird von der Steuereinheit in einen Arbeitsablauf umgesetzt. In der Steuereinheit wird erfindungsgemäß wenigstens eine Information zu wenigstens einem Merkmal wenigstens einer definierten Kontur hinterlegt.

Vorzugsweise beschreibt die definierte Kontur eine Ausnehmung in Form eines Schlitzes oder Biegeschlitzes. Biegeschlitze sind schmale Schlitze, die in einer beispielhaften Ausführungsform ca. 0,1 mm bis 1 mm breit sind, und werden vorzugsweise in einem Blech erzeugt. Sie werden insbesondere an den Stellen eines Bleches erzeugt, an welchen das Blech abgekantet oder gebogen werden soll.

Typisch sind Biegeschlitze, deren Kontur ein I oder ein T abzeichnet. Der sogenannte I-Schlitz und der sogenannte T-Schlitz können verrundet ausgeführt sein. Eine Ecke des I-bzw. T-Schlitzes weist jedoch grundsätzlich eine Rundung auf, die von einem vorzugsweise runden Fokuspunkt eines Lasers - auch als Laserfokuspunkt bezeichnet - herrührt. Jedoch werden I- und T-Schlitze auch bewusst verrundet, um eine Kerbwirkung auf die Schlitze bzw. auf deren eingeschnittene oder eingekerbte Konturen oder Teilkonturen zu verringern.

Es werden insbesondere definierte Konturen in der Steuereinheit hinterlegt, die als Flaschenhals erkannt und daher ausgelassen würden. Hierzu zählen insbesondere der I-Schlitz und der T-Schlitz.

Erfindungsgemäß erkennt die Steuereinheit die wenigstens eine hinterlegte Information zu wenigstens einem Merkmal wenigstens einer definierten Kontur innerhalb des NC-Programms und setzt die Konturverletzungsvermeidung außer Kraft. Die Ausnehmung, welche von der definierten Kontur beschrieben wird, wird erzeugt, auch wenn diese beispielsweise als ein Flaschenhals erkannt wurde und ausgelassen werden müsste. Da die Information zu wenigstens einem Merkmal der definierten Kontur in der Steuereinheit hinterlegt wurde, erkennt die Steuereinheit jedoch die definierte Kontur automatisch im NC-Programm und führt den Arbeitsablauf aus. Die Erfindung kann als Funktion zur Schlitzformerkennung in die Steuereinheit integriert werden.

Bevorzugt werden nur Schlitze als definierte Konturen in der Steuereinheit hinterlegt. Hierbei ist die Form relevant. Schlitze zeichnen sich vorzugsweise durch drei Merkmale aus: Sie sind vollkommen gerade, verfügen über zwei parallele Schneidlinien und weisen ein bestimmtes Länge-Breite-Verhältnis auf. Typischerweise ist ein Schlitz um den Faktor 200 bis 400 länger als breit.

Die in der Steuereinheit hinterlegte definierte Kontur beschreibt nicht unbedingt einen vollständigen Umriss einer zu erzeugenden Ausnehmung, beispielsweise eines Schlitzes.

Die Erfindung zielt besonders auf eine vereinfachte Handhabung einer Schneidmaschine ab, um den Arbeitsaufwand und damit verbundene Kosten für einen Endkunden zu reduzieren. Das erfindungsgemäße Verfahren ist insbesondere beim Laserschneiden von Vorteil, da die Durchtrennung von Festkörpern mittels eines Laserstrahls als eher ungenau gilt.

Ein Durchmesser des Laserfokuspunkts der Laserschneidmaschine steht in enger Beziehung zu einer Dicke eines zu bearbeitenden Materials, beispielsweise eines Blechs. Allgemein gilt hierbei: Je dicker das Blech ist, desto mehr Energie benötigt der Laser um eine Ausnehmung bzw. einen Schlitz zu erzeugen. Wird mehr Energie benötigt, da z. B. das Blech dicker ist, vergrößert sich der Durchmesser des Laserfokuspunkts. Somit ist mit einer deutlichen Vergrößerung des Durchmessers des Laserfokuspunkts zu rechnen, wenn anstatt eines Blechs mit beispielsweise einer Dicke von 0,1 cm ein Blech mit beispielsweise einer Dicke von 10 cm bearbeitet werden soll.

Ist in einer beispielhaften Ausführung aufgrund einer Vergrößerung der Dicke des Blechs von 0,5 cm auf 1 cm der Durchmesser des Laserfokuspunkts größer als die Breite der im NC-Programm vorhandenen Kontur eines I-Schlitzes, wird von der Steuereinheit ein Flaschenhals erkannt. Aufgrund der Konturverletzungsvermeidung wird der I-Schlitz nicht erzeugt. Erfindungsgemäß wird jedoch die Kontur des I-Schlitzes als definierte Kontur in der Steuereinheit hinterlegt. Erkennt die Steuereinheit die hinterlegte definierte Kontur, setzt sie die Konturverletzungsvermeidung automatisch außer Kraft und die Kontur wird bearbeitet. Vorzugsweise mittelt die Steuereinheit hierbei eine Linienbewegung des Lasers innerhalb der programmierten Kontur des I-Schlitzes, um Fehler und Abweichungen auf ein Minimum zu reduzieren. Leichte Konturverletzungen des I-Schlitzes können hierbei toleriert werden. Eine nach dem Stand der Technik arbeitende Schneidmaschine kann den I-Schlitz, der für das 0,5 cm dicke Blech programmiert wurde, nicht bei dem 1 cm dicken Blech ausführen, da die Konturverletzungserkennung einen Flaschenhals erkennt.

Oft liegt eine Bearbeitungsgenauigkeit einer Laserschneidmaschine bei ca. 0,1 mm. Die Genauigkeit der Steuereinheit liegt jedoch im µm-Bereich und darunter. Durch die Alterung einer Fokuslinse eines Lasers in der Laserschneidmaschine muss der Laserfokuspunkt sogar noch zusätzlich vergrößert werden, um noch die gewünschte Energie aufbringen zu können. Daher ist eine µm-genaue Bearbeitung des Festkörpers weder möglich noch hinsichtlich der genannten Schlitze und Biegeschlitze nötig.

Die Funktion zur Konturverletzungserkennung und die Funktion zur Konturverletzungsvermeidung können als separate Funktionen zur Verfügung stehen oder zu einer Funktion zusammengefügt werden.

Im Folgenden wird die Erfindung anhand der in den Figuren dargestellten Ausführungsbeispiele näher beschrieben und erläutert.
- FIG 1: zeigt einen beispielhaften Ablauf des Verfahrens zur Durchtrennung eines Festkörpers,
- FIG 2: zeigt eine Kontur eines I-Schlitzes,
- FIG 3: zeigt eine Kontur eines T-Schlitzes,
- FIG 4: zeigt eine Kontur eines verrundeten I-Schlitzes,
- FIG 5: zeigt eine Kontur eines verrundeten T-Schlitzes,
- FIG 6: zeigt eine gemittelte Linienbewegung zur Erreichung eines verrundeten I-Schlitzes.

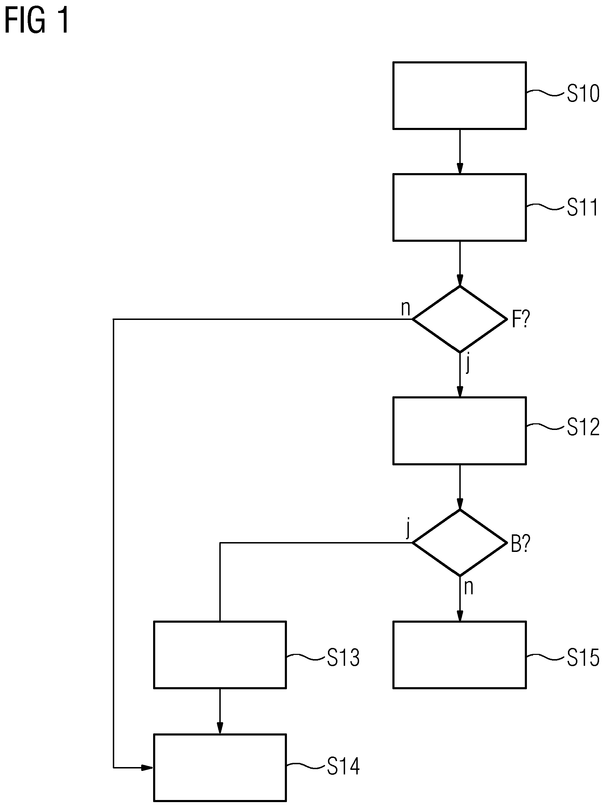

FIG 1 zeigt einen beispielhaften Ablauf des Verfahrens zur Durchtrennung eines Festkörpers mittels eines Hochenergiestrahls. Besonders gut eignet sich ein Laser in einer Laserschneidmaschine als Hochenergiestrahl. In einem Verfahrensschritt S10 wird wenigstens eine definierte Kontur oder wenigstens eine Information zu wenigstens einem Merkmal der definierten Kontur in einer Steuereinheit, die vorzugsweise in die Laserschneidmaschine integriert ist, hinterlegt. Jedoch können auch mehrere definierte Konturen hinterlegt werden. Vorzugsweise handelt es sich bei der hinterlegten definierten Kontur um einen Biegeschlitz, insbesondere in Form eines I-Schlitzes, eines T-Schlitzes, eines verrundeten I-Schlitzes oder eines verrundeten T-Schlitzes. Diese Kontur soll auf jeden Fall abgefahren und ein Schneidspalt erzeugt werden, auch wenn der erzeugte Schneidspalt nach einer Bearbeitung des Festkörpers beispielsweise größer als im NC-Programm hinterlegt und ursprünglich vorgesehen ausgeführt ist. In einem Verfahrensschritt S11 durchsucht die Steuereinheit ein NC-Programm nach Konturen, die von einer Konturverletzungserkennung als zu Konturverletzungen führende Konturen, z. B. als Flaschenhals, erkannt werden. Wird kein Flaschenhals erkannt - in der Figur mit F? und n gekennzeichnet - fährt der Hochenergiestrahl in einem Verfahrensschritt S14 auf einer dem Hochenergiestrahl zugewandten Oberfläche des Festkörpers die programmierte Kontur ab und erzeugt dabei einen Schneidspalt. Wird eine Kontur als Flaschenhals erkannt - in der Figur mit F? und j gekennzeichnet, wird diese in einem Verfahrensschritt S12 mit den in der Steuereinheit hinterlegten definierten Konturen aufgrund der Funktion zur Schlitzformerkennung verglichen. Stimmen die Konturen überein - in der Figur mit B? und j gekennzeichnet - wird in einem Verfahrensschritt S13 die Funktion zur Konturverletzungsvermeidung außer Kraft gesetzt und im Verfahrensschritt S14 ein Schneidspalt erzeugt. Um einen Konturfehler so klein wie möglich zu halten, mittelt die Steuereinheit zudem eine Linienbewegung des Laserfokuspunkts. Stimmen die Konturen nicht überein - in der Figur mit B? und n gekennzeichnet - wird die Kontur ausgelassen.

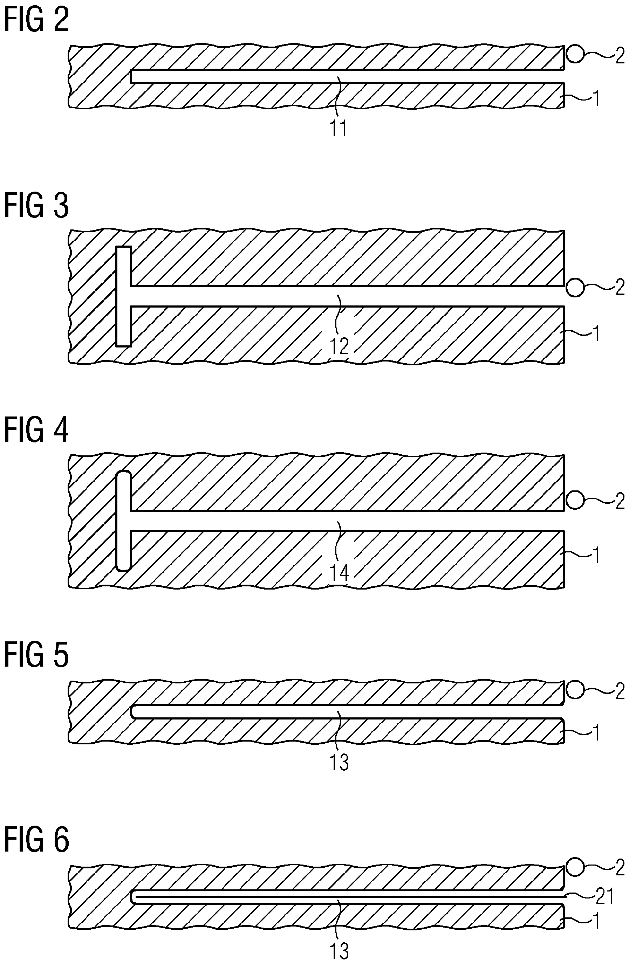

FIG 2 zeigt eine Kontur eines I-Schlitzes 11. Ein Laserfokuspunkt 2 eines Laserstrahls fährt die Kontur 11 auf einem Blech 1 ab. In einer beispielhaften Ausführung fährt der Laserfokuspunkt zuerst einen oberen Teil der Kontur ab und anschließend einen unteren Teil. Ist ein Durchmesser des Laserfokuspunkts 2 aus bereits erläuterten Gründen jedoch genau so breit wie oder breiter als die Kontur, verhindert die Funktion zur Konturverletzungsvermeidung in einer Laserschneidmaschine nach dem Stand der Technik eine Erzeugung des Schneidspalts. Beispielhaft wird der I-Schlitz 11 in der Steuereinheit hinterlegt, von der Steuereinheit als definierte Kontur aufgrund der Funktion zur Schlitzformerkennung erkannt und ein Schneidspalt erzeugt. Weiter mittelt die Steuereinheit eine Linienbewegung, um Fehler und Abweichungen zu der im NC-Programm programmierten Kontur so gering wie möglich zu halten. Auf diese gemittelte Linienbewegung wird in FIG 6 genauer eingegangen.

Wie in FIG 2 bereits beschrieben wird auch in FIG 3 verfahren. FIG 3 zeigt eine Kontur eines T-Schlitzes 12. Ein Laserfokuspunkt 2 eines Laserstrahls fährt die Kontur 12 auf einem Blech 1 ab. In einer beispielhaften Ausführung fährt der Laserfokuspunkt zuerst einen oberen Teil der Kontur ab und anschließend einen unteren Teil.

FIG 4 zeigt den in FIG 3 bereits erläuterten T-Schlitz 12 als verrundeten T-Schlitz 14. FIG 5 zeigt den in FIG 2 bereits erläuterten I-Schlitz 11 als verrundeten I-Schlitz 13. Ecken des I- bzw. T-Schlitzes weisen jedoch grundsätzlich eine Rundung auf, die von einem vorzugsweise runden Laserfokuspunkt 2 herrühren. Jedoch werden I- und T-Schlitze auch bewusst verrundet, um eine Kerbwirkung auf die Schlitze bzw. auf deren eingeschnittene oder eingekerbte Konturen oder Teilkonturen zu verringern.

Die in den FIG 2 bis 5 gezeigten Schlitze - I-Schlitz, verrundeter I-Schlitz, T-Schlitz und verrundeter T-Schlitz - sind in einem NC-Programm vorzugsweise als Geraden- und/oder Kreissegmente in einer NC- oder CNC-Teileprogrammsprache verfügbar.

FIG 6 zeigt die gemittelte Linienbewegung 21 des Laserfokuspunkts 2 einer Laserschneidmaschine als Ergebnis des erfindungsgemäßen Verfahrens. Die FIG 6 zeigt die Kontur eines verrundeten I-Schlitzes 13 in einem Blech 1. Der verrundete I-Schlitz 13 dient in diesem Ausführungsbeispiel als Biegeschlitz. Kleine Konturfehler und Abweichungen wiegen bei Biegeschlitzen nicht schwer. Der Endkunde legt aber Wert darauf, dass die Biegeschlitze in jedem Fall gefertigt werden. Der Durchmesser des Laserfokuspunkts 2 ist jedoch breiter als der verrundete I-Schlitz 13. Eine nach dem Stand der Technik arbeitende Steuereinheit würde die Kontur aufgrund der Funktion zur Konturverletzungsvermeidung nicht abfahren und keinen Schneidspalt erzeugen. Das beispielhafte Verfahren ermöglicht aufgrund der Funktion zur Schlitzformerkennung die Erzeugung des Schneidspalts, da die Kontur des I-Schlitzes von der Steuereinheit, in welcher eben diese Kontur vorher hinterlegt wurde, erkannt wird. Um den Konturfehler dennoch möglichst klein zu halten, mittelt die Steuereinheit die Linienbewegung des Laserfokuspunkts 2. In der FIG 6 fährt der Laserfokuspunkt 2 die Linie 21 von rechts nach links mittig innerhalb der Kontur ab. In einer beispielhaften Ausführung könnte ein I-Schlitz, dessen programmierte Kontur eine Breite von 0,3 mm misst, letztlich als 0,4 mm breiter Schneidspalt ausgeführt sein. Derart leichte Konturverletzungen können jedoch, insbesondere bei Biegeschlitzen, toleriert werden.

## Patentansprüche

1. Verfahren zur Durchtrennung eines Festkörpers, wobei ein Hochenergiestrahl auf einer dem Hochenergiestrahl zugewandten Oberfläche des Festkörpers eine Kontur abfährt und dabei einen Schneidspalt erzeugt, wobei eine die Durchtrennung steuernde Steuereinheit über eine Funktion zur Konturverletzungserkennung und über eine Funktion zur Konturverletzungsvermeidung verfügt,
**dadurch gekennzeichnet, dass** wenigstens eine Information zu wenigstens einem Merkmal wenigstens einer definierten Kontur in der Steuereinheit hinterlegt wird (S10), die Information von der Steuereinheit erkannt wird (S12) und bei erkannter Information die Konturverletzungsvermeidung automatisch außer Kraft gesetzt wird (S13).

2. Verfahren nach Anspruch 1, wobei der Hochenergiestrahl ein Laserstrahl ist und die Durchtrennung des Festkörpers mittels Laserschneiden bewerkstelligt wird.

3. Verfahren nach einem der Ansprüche 1 oder 2, wobei die Information in einem NC-Programm einer numerischen Steuereinheit angegeben wird.

4. Verfahren nach einem der Ansprüche 1 bis 3, wobei die als definierte Kontur ausgeführte Kontur von der Funktion zur Konturverletzungserkennung als ein Flaschenhals erkannt wird.

5. Verfahren nach einem der Ansprüche 1 bis 4, wobei die definierte Kontur als Schlitz, vorzugsweise als Biegeschlitz, ausgeführt wird.

6. Verfahren nach einem der Ansprüche 1 bis 5, wobei die definierte Kontur als I-Schlitz (11), verrundeter I-Schlitz (13), T-Schlitz (12) oder verrundeter T-Schlitz (14) ausgeführt wird.

7. Verfahren nach einem der Ansprüche 4 bis 6, wobei bei einer als Flaschenhals erkannten Kontur der Hochenergiestrahl die Kontur mit einer gemittelten Linienbewegung abfährt.

8. Steuereinheit zur Durchführung eines Verfahrens nach einem der Ansprüche 1 bis 7, wobei die Steuereinheit über eine Funktion zur Konturverletzungserkennung und über eine Funktion zur Konturverletzungsvermeidung verfügt,
**dadurch gekennzeichnet, dass** wenigstens eine Information zu wenigstens einem Merkmal wenigstens einer definierten Kontur in der Steuereinheit hinterlegbar ist, die Information von der Steuereinheit erkennbar ist und bei erkannter Information die Konturverletzungsvermeidung automatisch außer Kraft setzbar ist.

9. Steuereinheit nach Anspruch 8 zur Steuerung einer Laserschneidmaschine.

## Claims

1. Method for severing a solid body, wherein a high-energy beam travels along a contour on a surface of the solid body facing the high-energy beam and herein produces a cutting gap, wherein a control unit that controls the severing has a function for detecting contour breaches and a function for avoiding contour breaches,
**characterised in that** at least one item of information relating to at least one feature of at least one defined contour is stored in the control unit (S10), the information is detected by the control unit (S12) and, when the information is detected, the contour breach avoidance is automatically deactivated (S13).

2. Method according to claim 1, wherein the high-energy beam is a laser beam and the severing of the solid body is accomplished by means of laser cutting.

3. Method according to one of claims 1 or 2, wherein the information is specified in an NC program of a numerical control unit.

4. Method according to one of claims 1 to 3, wherein the contour implemented as a defined contour is detected by the function for detecting contour breaches as a bottleneck.

5. Method according to one of claims 1 to 4, wherein the defined contour is implemented as a slot, preferably as a bending slot.

6. Method according to one of claims 1 to 5, wherein the defined contour is implemented as an I-slot (11), rounded I-slot (13), T-slot (12) or rounded T-slot (14).

7. Method according to one of claims 4 to 6, wherein, when a contour is detected as a bottleneck, the high-energy beam travels along the contour with an averaged line movement.

8. Control unit for carrying out a method according to one of claims 1 to 7, wherein the control unit has a function for detecting contour breaches and a function for avoiding contour breaches,
**characterised in that** at least one item of information relating to at least one feature of at least one defined contour can be stored in the control unit, the information can be detected by the control unit and, when the information is detected, the contour breach avoidance can be automatically deactivated.

9. Control unit according to claim 8 for controlling a laser cutting machine.

## Revendications

1. Procédé de sectionnement d'un corps solide, dans lequel un faisceau de grande énergie parcourt un contour sur une surface, tournée vers le faisceau de grande énergie, du corps solide et produit ainsi une fente de coupe, dans lequel une unité de commande, commandant le sectionnement dispose d'une fonction de détection d'atteinte au contour et d'une fonction d'empêchement d'une atteinte au contour,
**caractérisé en ce que** l'on met en mémoire (S10) dans l'unité de commande une information sur au moins une caractéristique d'au moins un contour défini, on détecte (S12) l'information par l'unité de commande et, l'information détectée, on rend (S13) inactif automatiquement l'empêchement d'une atteinte au contour.

2. Procédé suivant la revendication 1, dans lequel le faisceau de grande énergie est un faisceau laser et on provoque le sectionnement du corps solide au moyen d'une découpe par laser.

3. Procédé suivant l'une des revendications 1 ou 2, dans lequel on indique l'information dans un programme NC d'une unité de commande numérique.

4. Procédé suivant l'une des revendications 1 à 3, dans lequel on détecte sous la forme d'un col de bouteille le contour, réalisé sous la forme d'un contour défini, par la fonction de détection d'une atteinte au contour.

5. Procédé suivant l'une des revendications 1 à 4, dans lequel on réalise le contour défini sous la forme d'une fente, de préférence sous la forme d'une fente de flexion.

6. Procédé suivant l'une des revendications 1 à 5, dans lequel on réalise le contour défini sous la forme d'une fente (11) en I, d'une fente (13) en I arrondie, d'une fente (12) en T ou d'une fente (14) en T arrondie.

7. Procédé suivant l'une des revendications 4 à 6, dans lequel pour un contour détecté sous la forme d'un col de bouteille, le faisceau de grande énergie parcourt le contour avec un mouvement linéaire en moyenne.

8. Unité de commande pour effectuer un procédé suivant l'une des revendications 1 à 7, dans laquelle l'unité de commande dispose d'une fonction de détection d'une atteinte au contour et d'une fonction pour empêcher une atteinte au contour,
**caractérisée en ce que** au moins une information sur au moins une caractéristique d'au moins un contour défini peut être mise en mémoire dans l'unité de commande, l'information peut être détectée par l'unité de commande et, l'information détectée, l'empêchement d'une atteinte au contour est rendu inactif automatiquement.

9. Unité de commande suivant la revendication 8 pour commander une machine de coupe par laser.
